# EUROPEAN PATENT SPECIFICATION

(11) **EP 0 697 109 B1**
(45) Date of publication and mention of the grant of the patent: **14.07.1999**
(21) Application number: 95907130.9
(22) Date of filing: 15.02.1995
(51) Int. Cl.: G01N 23/223

(54) **X-RAY SPECTROMETER WITH A GRAZING TAKE-OFF ANGLE**
RÖNTGENSPEKTROMETER MIT STREIFENDEM AUSFALLWINKEL
SPECTROMETRE A RAYONS X PRESENTANT UN ANGLE DE CAPTURE RASANT

(30) Priority: 02.03.1994 EP 94200525
(43) Date of publication of application: 21.02.1996
(73) Proprietor: Koninklijke Philips Electronics N.V., 5621 BA Eindhoven (NL)
(72) Inventor: DE BOKX, Pieter, Klaas, NL-5621 BA Eindhoven (NL)
(74) Representative: Bakker, Hendrik
(86) International application number: IB9500104
(87) International publication number: WO9523963

(56) References cited:
- EP-A- 0 282 466
- Spectrochimica Acta, Volume 48B, No. 2, 1993, (Great Britain), G. TOELG et al., "The Role of Total-Reflection X-Ray Fluorescence in Atomic Spectroscopy", page 111 - page 127, cited in the application.

## Description

The invention relates to an apparatus for X-ray analysis of materials, comprising an X-ray source for producing an X-ray beam in a given zone to be irradiated, a specimen support for supporting a specimen of the material to be examined which is arranged in the zone to be irradiated, and a detector for detecting X-rays excited in the specimen by the irradiating X-ray beam.

An apparatus of this kind is described in an article entitled "The role of total-reflection X-ray fluorescence in atomic spectroscopy", by G. Tölg and R. Klockenkämper in "Spectrochimica Acta", Vol. 48B, No. 2 (1993), pp. 111-127.

Generally speaking, for X-ray analysis of materials an as high as possible signal-to-noise ratio is to be achieved in the beam emanating from the specimen. The signal is in that case constituted by the intensity of X-rays excited by the material under the influence of an X-ray beam incident on the specimen in the zone of relevance, notably the surface thereof in many applications (such as for the study of surfaces of integrated circuits). The noise is in that case caused by X-rays scattered in deeper layers of the specimen.

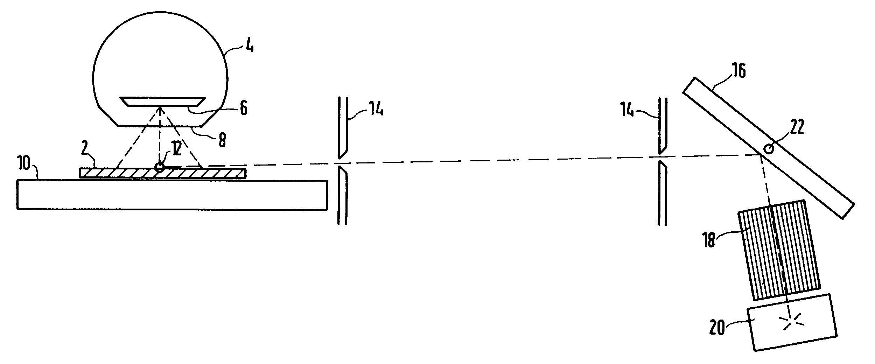

The cited article describes a method of analysis in which a very attractive signal-to-noise ratio is achieved by utilizing a grazing incidence of the X-rays. The noise component in the emanating radiation is thus strongly reduced. This technique is known as Total Reflection X-ray Fluorescence or TXRF. The TXRF apparatus described in the cited article (notably with respect to Fig. 1 and in the associated section 2 on pages 113 and 114) comprises an X-ray tube whose X-rays are incident on a specimen, after monochromatization and paralleling, in such a manner that the angle between the specimen surface and the incident parallel beam is smaller than the critical angle for total reflection of X-rays. The X-rays thus excited in the specimen are intercepted by an Si(Li) detector arranged at a very short distance from the irradiated zone of the specimen.

Because in this known method the incident beam must enclose a very small angle (of the order of magnitude of between 0.01° and 1°) relative to the specimen surface, very severe requirements are imposed as regards the parallelism of the incident beam. This means that only a small part of the radiation generated by the X-ray tube can be used, because X-rays can be paralleled only by removing the non-parallel part from the beam. In the cited article this is effected by a multilayer mirror. This means that the radiation emanating from the specimen also has a comparatively low intensity. In order to enable effective measurement despite this low intensity, use is made of a detector which captures the X-rays emanating from the specimen with a large solid angle, so that the amount of radiation lost to the detection at the exit side is miminized. Therefore, use is made of a detector which has a large detection surface area and which is arranged near the specimen.

Generally speaking, an X-ray detector is one of the two types to be described hereinafter: the energy-dispersive type or the wavelength-dispersive type.

For each photon absorbed in the detector an energy-dispersive detector supplies a current pulse whose charge contents equals the energy of the photon. These current pulses can be electronically selected in respect of charge contents, so that in one measuring period the number of current pulses of a given charge contents (*i.e.* the intensity) can be determined for all current pulses in dependence on the charge contents (*i.e.* the energy of the photons). Because the energy of a photon of X-rays is inversely proportional to the wavelength of the radiation, the intensity of the X-rays incident on the detector is thus determined as a function of the wavelength. This type of detector includes the Si(Li) detector mentioned. Even though this detector exhibits a comparatively favourable signal-to-noise ratio in relation to other energy-dispersive detectors (such as a gas-filled detector), this ratio is still comparatively high in the event of small charge contents *(i.e.* long X-ray wavelengths). This is due to the fact that the spread in the charge contents Q for one given photon energy is proportional to √Q; therefore, this effect increases for a lower Q. In practice, this means that X-rays excited by elements having an atomic number lower than 11 cannot be measured by means of an energy-dispersive detector. (For this problem see also "Principles and Practice of X-ray Spectrometric Analysis", 2nd ed. by Eugene P. Bertin, Plenum Press, New York-London, chapter 6, paragraph 4.)

Each photon in a detector of the wavelength-dispersive type is converted into an electric pulse whose pulse height and/or charge contents are irrelevant. Therefore, in this detector exclusively the number of photons is determined. Such a detector is formed, for example by an assembly consisting of successively a Soller slit, an analysis crystal and an X-ray counter tube. The Soller slit selects the radiation of the desired direction from the beam emanating from the specimen, which radiation is subsequently incident on the analysis crystal. In accordance with the known Bragg relation, this crystal reflects practically just one wavelength, *i.e.* the wavelength associated with the angle of incidence (and an immediate vicinity thereof, for example 0.25°) of the selected radiation. By rotation of the analysis crystal during the measurement, the entire desired range of angles of incidence is traversed and hence also the associated range of wavelengths. The relationship between the radiation intensity (being proportional to the counting speed of the counter tube) and the wavelength is thus established. Because the radiation applied to the analyzer crystal must be thoroughly parallel, this crystal is preceded by a collimator, for example a Soller slit. One consequence of the paralleling of the radiation emanating from the specimen consists in that its intensity is strongly reduced. Consequently, this detector cannot be used for the said TXRF measuring method, since the intensity of the incident beam has already been strongly reduced, so that after a second paralleling operation insufficient signal would remain for detection.

Because of the described signal-to-noise behaviour of the energy-dispersive detector, the TXRF method of measurement disclosed in the cited article is not suitable for use for elements having an atomic number lower than 11, as is also described in section 2 of the second cited article.

It is an object of the invention to provide an apparatus for X-ray analysis of the kind set forth which has an improved resolution for the light elements. To achieve this, the apparatus in accordance with the invention is characterized in that it comprises selection means for spatial selection of that part of the X-rays emanating from the specimen which emerges at a grazing angle relative to the specimen surface, said selected part of the radiation being applied to the detector, and that the detector for the detection of the X-rays emanating from the specimen is constructed as a wavelength-dispersive detector.

The invention is based on the recognition of the fact that in the case of grazing take off of the excited radiation the specimen emits X-rays to the detector exclusively from a small depth; even though X-rays are excited in the deeper layers, they do not reach the detector so that these layers do not contribute to the noise in the signal. In the case of grazing take off it is not necessary to parallel the incident X-ray beam, so that the full intensity produced by the X-ray source can be used to irradiate the specimen. Moreover, it is no longer necessary to arrange a collimator between the X-ray source and the specimen, so that the X-ray source can be arranged much closer to the specimen; the X-ray intensity for the specimen is thus further increased. As a result of these steps, the intensity of the radiation excited by the specimen is so high that this radiation can be paralleled, thus enabling the use of a wavelength-dispersive detector which is also capable of detecting soft X-rays originating from light elements.

The apparatus according to the invention is also characterized in that the selection means for selecting the sub-radiation are arranged to select a grazing angle which is smaller than the critical angle for total X-ray reflection.

In the context of the present invention the "critical angle for total X-ray reflection" is to be understood to mean the angle at which incident X-rays do not penetrate the material but are completely reflected. However, it is alternatively possible to perform measurements on multilayer systems such as multilayer X-ray mirrors. These are periodic stacks of very thin layers, each period consisting of two or more materials. Therefore, in a structure of this kind several types of optical surfaces are present, so that a plurality of critical angles can occur therein; in the context of the present invention the critical angle is then to be understood to mean the largest of the critical angles occurring in such a structure.

The latter step also offers a significant further enhancement of the signal-to-noise ratio, because below the critical angle only the layer thickness which is involved in the total reflection contributes to the excited radiation; in dependence on the magnitude of the critical angle, this thickness is of the order of magnitude of from 3 nm to 10 nm.

In conformity with a further step of the invention, the apparatus in accordance with the invention is characterized in that the X-ray source of the apparatus is arranged to produce a beam of X-rays having a wide wavelength spectrum. Because a wide wavelength spectrum can be used (instead of one spectral line), the various elements occurring in the specimen can be struck by way of the wavelength which is optimum for each element, again resulting in an as high as possible intensity emanating from the specimen.

According to another step of the invention, the apparatus in accordance with the invention is characterized in that it comprises means for evacuating the specimen support and its surroundings. The method of measurement in accordance with the invention is particularly intended for light elements, *i.e.* the detection of soft *(i.e.* longwave) X-rays. These rays are absorbed comparatively strongly by air. Moreover, in order to derive full benefit from measurement at a grazing take-off angle, the distance between specimen and detector is preferably as large as possible. This is because for a given slit width of the detector-collimator optimum angular resolution is then feasible. However, this implies a long path for the emanating longwave X-rays, and hence possibly an undesirably high absorption. This problem is mitigated by evacuation of the specimen space.

In conformity with another step yet of the invention, the apparatus in accordance with the invention is characterized in that it comprises cooling means for cooling the specimen. Because the specimen is exposed to X-rays of high intensity, notably in the case of irradiation with a wide wavelength spectrum, its temperature may become undesirably high. This is the case notably when the specimen is arranged in vacuum, because there is no cooling by ambient air in those circumstances. Temperature gradients in the specimens and the supporting construction can then readily give rise to a deviation in the take-off angle. This is of particular importance because in accordance with the invention the take-off angle generally has a very small value. In some cases it is even necessary to measure an intensity distribution within this small angular value, making the problem imposed by temperature drift even more significant because of the even higher angular resolution then required. This problem is mitigated to a high degree by appropriate specimen cooling.

In conformity with a further step of the invention, the apparatus in accordance with the invention is characterized in that the wavelength-dispersive detector comprises an adjustable collimator. For some measurements it is necessary to measure the intensity distribution of the X-rays emanating from the specimen in the vicinity of the critical angle. This can be achieved by providing the detector with a collimator which selects a comparatively small part of the area around the take-off angle. The slit width of the collimator then determines the angular resolution of the detector. In order to enable adjustment of this resolution in dependence on the requirements imposed on the measurement, the collimator is preferably constructed so as to be adjustable. The intensity distribution can then be measured in that the specimen holder is constructed so as to be rotatable about an axis extending parallel to the specimen plane.

The invention will be described in detail hereinafter with reference to the Figure. The Figure shows diagrammatically the arrangement of the relevant elements of an apparatus for X-ray analysis in accordance with the invention. A specimen 2 is irradiated by X-rays from an X-ray source 4 in the form of a conventional X-ray tube.

X-rays are generated in said tube by an X-ray anode 6, which rays leave the tube *via* a window 8. The wavelength spectrum of the tube can be chosen at option as a well-defined spectral line or as a wide spectrum. To this end, the window 8 is preferably constructed so as to have a shape which transmits a wide spectrum of X-rays with the least attenuation. If desired, for the selection of a wavelength range a known radiation filter (not shown in the Figure) may be inserted between the tube and the specimen.

With a view to achieving an optimum radiation intensity on the specimen, the X-ray tube 4 can be arranged at an arbitrarily short distance from the specimen, said distance being restricted only by the degree of freedom required during rotation of the specimen. The specimen is arranged on a specimen support 10 which is rotatable about a shaft 12 which is situated in the surface of the specimen. The take-off angle of the radiation excited in the specimen can be adjusted by rotation about this shaft. The specimen support is also translatable in its own plane, so that given parts of the specimen can be irradiated, if desired. The latter facility is attractive notably in the case of specimens exhibiting local inhomogeneities or in the case of multilayer structures where discontinuous coating of one of the layers is liable to occur because of the small thickness. The specimen support is preferably constructed as an element which can be cooled, so that the heat generated in the specimen by the X-rays can be discharged directly from the location where it arises.

The take-off angle of the X-rays excited by the specimen is determined by a collimator system 14 which is rotatable about a shaft between the two collimator slits, so that the collimator system can be aimed at a desired surface area of the specimen. Moreover, in order to find the correct position relative to the specimen, the collimator system can also be rotated about an axis extending perpendicularly to and through the slits, and about an axis extending perpendicularly to said axis and situated in the space between the slits.

Behind the collimator system there is arranged an analysis crystal 16 which is known *per se* and which serves to select the radiation, generated in the specimen, according to wavelength. As is known, X-rays incident on a monocrystal are reflected only at very well-defined angles in conformity with the Bragg reflection condition known from X-ray diffraction, said angles also being dependent on the wavelength. The collimator system 14 defines an exact angle of incidence on the analyzer crystal. By rotating the crystal about a shaft 22 extending parallel to the collimator slits, a range of angles of incidence is traversed and hence a range of reflected wavelengths. The analyzer crystal is manufactured in such a manner *(i.e.* as a so-called mosaic crystal, being a multitude of monocrystals which are all aligned in the same way so that they appear practically as one monocrystal) that the reflection angle exhibits a spread of the order of magnitude of 0.25°, so that sufficient reflected intensity remains also when a low intensity is incident on the crystal.

Subsequent to the analyzer crystal there is arranged a further collimator 18. This collimator serves to minimize any radiation generated in the analyzer crystal by crystal fluorescence and by dispersion. The collimator 18 may be constructed as a known Soller slit. The radiation emanating from the collimator 18 is incident on a detector 20, for example a gas-filled counter tube which is sensitive to soft X-rays as originating from elements in the specimen whose atomic number is lower than 11.

The assembly formed by the X-ray tube 4, the specimen 2 and the specimen support 10, and the entire path between the specimen and the detector, can be accommodated in a vacuum envelope, so that absorption of notably the soft X-rays by ambient air is counteracted.

## Claims

1. An apparatus for X-ray analysis of materials, comprising
* an X-ray source (4) for producing an X-ray beam in a given zone to be irradiated,
* a specimen support (10) for supporting a specimen (2) of the material to be examined which is arranged in the zone to be irradiated,
* a detector (20) for detecting X-rays excited in the specimen (2) by the irradiating X-ray beam,
characterized in that
* the apparatus comprises selection means (14) for spatial selection of that part of the X-rays emanating from the specimen (2) which emerges at a grazing angle relative to the specimen surface, said selected part of the radiation being applied to the detector (20),
* the detector (20) for the detection of the X-rays emanating from the specimen is constructed as a wavelength-dispersive detector.

2. An apparatus as claimed in Claim 1, characterized in that the selection means (14) for selecting the sub-radiation are arranged to select a grazing angle which is smaller than the critical angle for total X-ray reflection.

3. An apparatus as claimed in any one of the preceding Claims, characterized in that the X-ray source (4) of the apparatus is arranged to produce a beam of X-rays having a wide wavelength spectrum.

4. An apparatus as claimed in any one of the preceding Claims, characterized in that the apparatus comprises means for evacuating the specimen support (2) and its surroundings.

5. An apparatus as claimed in any one of the preceding Claims, characterized in that the apparatus comprises cooling means for cooling the specimen (2).

6. An apparatus as claimed in any one of the preceding Claims, characterized in that the wavelength-dispersive detector (20) comprises an adjustable collimator (14).

7. An apparatus as claimed in any one of the preceding Claims, characterized in that the specimen support (10) is constructed so as to be rotatable about a shaft (12) extending parallel to the specimen plane.

## Patentansprüche

1. Gerät zur Röntgenanalyse von Materialien, mit
* einer Röntgenquelle (4) zum Erzeugen eines Röntgenstrahlenbündels in einer bestimmten zu bestrahlenden Zone,
* einem Probenträger (10) zum Tragen einer Probe (2) des zu untersuchenden Materials, die in der zu bestrahlenden Zone angeordnet ist,
* einem Detektor (20) zum Detektieren von in der Probe (2) durch das bestrahlende Röntgenstrahlenbündel angeregten Röntgenstrahlen,
dadurch gekennzeichnet, dass
* das Gerät Selektionsmittel (14) umfasst zur räumlichen Selektion desjenigen Teils der aus der Probe (2) tretenden Röntgenstrahlen, der unter einem streifenden Winkel relativ zur Probenfläche austritt, wobei der genannte selektierte Teil der Strahlung dem Detektor (20) zugeführt wird,
* der Detektor (20) zur Detektion der aus der Probe tretenden Röntgenstrahlen als wellenlängendispersiver Detektor ausgeführt ist.

2. Gerät nach Anspruch 1, dadurch gekennzeichnet, dass die Selektionsmittel (14) zum Selektieren der Teilstrahlung ausgebildet sind, um einen streifenden Winkel zu selektieren, der kleiner ist als der Grenzwinkel für Röntgentotalreflexion.

3. Gerät nach einem der vorhergehenden Ansprüche, dadurch gekennzeichnet, dass die Röntgenquelle (4) des Geräts ausgebildet ist, um ein Strahlenbündel aus Röntgenstrahlen mit einem breiten Wellenlängenspektrum zu erzeugen.

4. Gerät nach einem der vorhergehenden Ansprüche, dadurch gekennzeichnet, dass das Gerät Mittel zum Evakuieren des Probenträgers (2) und seiner Umgebung umfasst.

5. Gerät nach einem der vorhergehenden Ansprüche, dadurch gekennzeichnet, dass das Gerät Kühlmittel zum Kühlen der Probe (2) umfasst.

6. Gerät nach einem der vorhergehenden Ansprüche, dadurch gekennzeichnet, dass der wellenlängendispersive Detektor (20) einen einstellbaren Kollimator (14) umfasst.

7. Gerät nach einem der vorhergehenden Ansprüche, dadurch gekennzeichnet, dass der Probenträger (10) um eine parallel zur Probenebene verlaufende Welle (12) drehbar ausgeführt ist.

## Revendications

1. Appareil conçu pour une analyse à rayons X de matériaux, comprenant
* une source de rayons X (4) pour produire une faisceau de rayons X dans une zone déterminée à irradier,
* un support d'échantillon (10) pour supporter un échantillon (2) du matériau à examiner, lequel support est disposé dans la zone à irradier,
* un détecteur (20) pour détecter des rayons X excités dans l'échantillon (2) par le faisceau de rayons X d'irradiation,
caractérisé en ce que
* l'appareil comprend des moyens de sélection (14) pour la sélection spatiale de la partie des rayons X provenant de l'échantillon (2) qui sort sous un angle rasant par rapport à la surface d'échantillon, ladite partie sélectionnée du rayonnement étant appliquée au détecteur (20),
* le détecteur (20) pour la détection des rayons X sortant de l'échantillon est construit sous forme d'un détecteur dispersif de longueurs d'onde.

2. Appareil selon la revendication 1, caractérisé en ce que les moyens de sélection (14) réalisés pour la sélection du rayonnement partiel sont conçus pour la sélection d'un angle rasant qui est inférieur à l'angle critique pour la réflexion de rayons X totale.

3. Appareil selon l'une des revendications précédentes, caractérisé en ce que la source de rayons X (4) de l'appareil est disposée pour produire un faisceau de rayons X présentant un large spectre de longueurs d'onde.

4. Appareil selon l'une des revendications précédentes, caractérisé en ce que l'appareil est muni de moyens pour évacuer le support d'échantillon (2) et ses environs.

5. Appareil selon l'une des revendications précédentes, caractérisé en ce que l'appareil est muni de moyens de refroidissement pour le refroidissement de l'échantillon (2).

6. Appareil selon l'une des revendications précédentes, caractérisé en ce que le détecteur dispersif de longueurs d'onde (20) est muni d'un collimateur réglable (14).

7. Appareil selon l'une des revendications précédentes, caractérisé en ce que le support d'échantillon (10) est réalisé de façon à pouvoir tourner autour d'un axe (12) qui s'étend d'une façon parallèle par rapport au plan de l'échantillon.
